# EUROPEAN PATENT APPLICATION

(11) **EP 2 317 098 A1**
(43) Date of publication of application: **04.05.2011**
(21) Application number: 09794558.8
(22) Date of filing: 10.07.2009
(51) Int. Cl.: F02C 9/40, F02C 3/22, F02C 9/34, F23R 3/34, F23R 3/36

(54) **GAS TURBINE OPERATION-CONTROLLING DEVICE**

(30) Priority: 11.07.2008 JP 2008181751
(71) Applicant: Toyota Jidosha Kabushiki Kaisha, Toyota-shi, Aichi 471-8571 (JP)
(72) Inventor: NAKAMURA, Norihiko, Toyota-shi Aichi 471-8571 (JP)
(74) Representative: TBK-Patent
(86) International application number: PCT/JP2009/062934
(87) International publication number: WO 2010/005120

(57) **Abstract**

An operational control system of a gas turbine which is driven using mainly ammonia as fuel, wherein in a deteriorated combustibility operating region where the combustibility of ammonia deteriorates compared with the time of normal operation of the gas turbine, for example, at the time of cold startup of the gas turbine and right after startup or right before stopping operation, etc., a ratio of fossil fuel in the fuel which is fed to the gas turbine is increased over the time of normal operation. Due to this, even when using nonflammable ammonia as a main fuel, it is possible to stably start up, operate, and stop the gas turbine.

## Description

### Technical Field

The present invention relates to an operational control system of a gas turbine.

### Background Art

Recently, global warming has become an increasingly serious concern. Its main cause is believed to be the carbon dioxide (CO₂) etc. released into the atmosphere from the oil, natural gas, and other fossil fuels used in such huge amounts as sources of energy since the start of the 20th century. Therefore, fast suppression of the emission of CO₂ and other greenhouse gases is being sought for protecting the global environment.

On the other hand, as a result of the increase in energy demand, fossil fuels, which were once considered an inexhaustible resource, will clearly eventually be depleted. Prices of fossil fuels are continuing to skyrocket by a rate far faster than expected. In the near future, humanity will find it difficult to expect much from fossil fuel energy.

As particularly large consumers of these rapidly depleting fossil fuels and producers of CO₂, thermal power plants may be mentioned. At the present time, thermal power plants generate about 70% of the electric power in the world, but thermal power plants use natural gas, heavy oil, coal, and other fossil fuels and thus discharge huge amounts of CO₂ day and night.

At the present time, as the drive power for turning generators in thermal power plants, mainly gas turbines or steam turbines are being employed. Gas turbines are a type of internal combustion engine. Combustors inside the gas turbine directly burn the fuel to produce high temperature, high pressure gas which is then used to drive the turbine blades to obtain drive force. In gas turbines, at the present time, natural gas is mainly being used as fuel.

On the other hand, a steam turbine is one type of external combustion engine. A boiler is used to burn fuel to produce high temperature, high pressure steam which is then used to drive the turbine blades to take out drive force. In a steam turbine, heavy oil and coal (pulverized coal) are mainly used as fuel. Further, in a composite system (combined type system of a gas turbine and a steam turbine), the excess heat of exhaust of the gas turbine is used to produce steam which is then used to drive the steam turbine, and as a result, drive power can be obtained from both the gas turbine and steam turbine and a high overall efficiency can be obtained (for example, Patent Literature 1).

In this way, in all of the above systems employed in thermal power plants, natural gas, heavy oil, coal, or other fossil fuel is used. For this reason, in thermal power plants, huge amounts of fossil fuels are being consumed and massive CO₂ is being exhausted. For this reason, to reduce the emission of CO₂ from thermal power plants, it has been proposed to utilize a CO₂ absorbing and releasing material to separate and recover the CO₂ from the exhaust gas containing CO₂ which is exhausted from a gas turbine etc. (for example, Patent Literature 2).

### Citation List

### Patent Literature

Patent Literature 1: Japanese Patent Publication (A) No. 2006-9574
Patent Literature 2: Japanese Patent Publication (A) No. 2000-297656

### Summary of Invention

### Technical Problem

In this regard, as a fundamental solution to the increase in emission of CO₂ and other greenhouse gases and the depletion of fossil fuels, the inventors of the present application propose conversion or storage and utilization of inexhaustible solar energy. Specifically, they attempt to use solar energy as a primary energy source to produce clean ammonia from water and air, transport this ammonia to the final consumption area, and use the ammonia at the final consumption area to obtain energy.

Various methods of use of ammonia at the final consumption area may be considered. As one of these, use in a thermal power plant may be mentioned. If using ammonia as fuel in a thermal power plant, no CO₂ at all would be exhausted, so it would be possible to dramatically reduce the emission of CO₂. Further, it would be possible to deal with future increases in demand for electrical power without consuming the increasingly dwindling fossil fuels. Therefore, a main object of the present invention is to provide a gas turbine, steam turbine, etc. in a thermal power plant where ammonia is used as a fuel in place of the fossil fuels which are currently being used as fuel and where, due to this, the production of CO₂ and the consumption of fossil fuels can be suppressed.

Ammonia, as shown by the molecular formula NH₃, contains a large amount of hydrogen (about 18 wt%) and if made to completely burn, becomes water and nitrogen. No CO₂ is produced at all. However, ammonia is a nonflammable substance, so does not easily burn. The minimum ignition energy which is required for ignition is 8 mJ or about 30 times that of gasoline. Further, the self ignition temperature is also 650°C or more, and thus is extremely stable. Furthermore, even if once igniting, the combustion speed becomes 1.5 cm/s or about 1/40th of the combustion speed of gasoline. The flammability range (range of concentration where burning is possible) is also an extremely narrow 15% to 28%. For this reason, ammonia is a substance which is extremely difficult to burn. It has therefore not been used as a fuel for gas turbines etc. much at all in the past.

When desiring to use the nonflammable ammonia as fuel, causing it to burn is most difficult when starting up the gas turbine etc. and right after that. At the time of start or right after that, the temperature of the combustors or other components of the gas turbine and the temperature of the air which is fed are low and incomplete combustion easily occurs. As the reasons for such easy occurrence of incomplete combustion, the following two reasons can mainly be mentioned.

The first reason is the uniformity of the air-fuel mixture of fuel and air. To make an air-fuel mixture completely burn, it is necessary to vaporize the liquid fuel to render it into a gaseous state and to uniformly mix it with the air which is fed. First, for liquid fuel to vaporize, heat of vaporization has to be robbed from the surroundings, but at this time, if the temperature of the combustors or other components is low, the liquid fuel cannot be given sufficient heat. For this reason, if the temperature of the components is low, the liquid fuel will incompletely vaporize and a uniform air-fuel mixture of fuel gas and air cannot be obtained.

The heat of vaporization which is required at the time of vaporization differs depending on the fuel. Ammonia evaporates under atmospheric pressure at -33.5°C and changes from a liquid to a gas, but the heat of vaporization which is required at this time is an extremely great 1371 kJ/kg or about 4 times that of liquefied natural gas, oil, or other fossil fuel. In this way, the heat of vaporization of ammonia is extremely great, so at the cold state, the combustors and fed air end up being cooled and sufficient heat ends up no longer being able to be given to the air-fuel mixture. For this reason, the vaporization of the ammonia becomes insufficient and the uniformity of the air-fuel mixture ends up being greatly impaired.

The second reason is the narrow flammability range of ammonia. If the flammability range could be broadened like natural gas etc., even if some uniformity were lost, the air-fuel mixture could be burned. However, the flammability range of ammonia is narrow, so if the air-fuel mixture is uneven, more incomplete combustion areas will be caused and sustained combustion will become difficult.

Further, when desiring to utilize the nonflammable ammonia as fuel, burning the fuel is similarly difficult right before stopping the gas turbine etc. That is, right before stopping the turbine, it is necessary to gradually reduce the feed amount of fuel, but if gradually reducing the feed of fuel, due to the effects of heat loss and the heat of vaporization of ammonia, the temperature of the combustion gas will gradually decline. For this reason, the ammonia insufficiently vaporizes and the air-fuel mixture is easily impaired in uniformity. Further, the flammability range changes in accordance with the temperature of the air-fuel mixture. When the air-fuel mixture is a high temperature, the flammability range becomes somewhat broader, but if the combustion gas gradually falls in temperature, the air-fuel mixture will become narrower in flammability range and incomplete combustion will occur.

In this way, if utilizing nonflammable ammonia as fuel, incomplete combustion will end up occurring at the time of start of the gas turbine or right after start. If incomplete combustion occurs in this way, a large amount of unburned ammonia will be exhausted to the outside of the gas turbine.

Furthermore, when trying to utilize nonflammable ammonia as fuel, even during normal operation of the gas turbine etc. (that is, not at the time of startup of the gas turbine etc., right after startup, right before stopping, etc., but when stably and steadily operating the gas turbine), unforeseen circumstances may disturb the air-fuel mixture and the air-fuel mixture may end up deviating in concentration from the flammability range. In this case as well, partially incomplete combustion will occur and the combustion gas will drop all at once in temperature and a large amount of unburned ammonia will be exhausted to the surroundings.

In this way, to make nonflammable ammonia stably burn for use in a turbine, much more ingenuity is required than with the conventional natural gas, heavy oil, and other easily burnable fossil fuels. For example, it is necessary to strengthen the ignition device or improve the combustor shape or nozzle shape to form a more uniform air-fuel mixture and further to meter and control the fuel feed amount and air feed amount by a much higher precision so as not to exceed the flammability range. However, the deterioration of combustion at the time of startup from a cold state or right before stopping is a fundamental problem in nonflammable ammonia. There are limits to what can be done by improvement of the combustors, nozzles, etc., and therefore fundamental solution of the problem is difficult.

An object of the present invention is to fundamentally solve this inherent problem of the combustion of ammonia by improving the method of operation, in particular to provide an operational control system of a gas turbine which enables the stable start, operation, and stopping of a gas turbine even when using nonflammable ammonia as the main fuel.

### Solution to Problem

The present invention, as means for solving the above problems, provides a control system of an internal combustion engine described in the claims.

In one aspect of the present invention, there is provided an operational control system of a gas turbine which is driven using mainly ammonia as fuel, wherein in a deteriorated combustibility operating region where the combustibility of ammonia deteriorates compared with the time of normal operation of the gas turbine, a ratio of fuel with a higher combustibility than ammonia in the fuel which is fed to the gas turbine is increased over the time of normal operation.

In another aspect of the present invention, the fuel with a higher combustibility than ammonia is a fossil fuel.

In another aspect of the present invention, the deteriorated combustibility operating region is an operating region where vaporization of ammonia is incomplete when feeding ammonia to the gas turbine as main fuel.

In another aspect of the present invention, the deteriorated combustibility operating region is an operating region where an ambient temperature around a fuel burning part where the fuel is burned is lower compared with the time of normal operation.

In another aspect of the present invention, the deteriorated combustibility operating region is an operating region at the time of start of the gas turbine or right after start.

In another aspect of the present invention, the deteriorated combustibility operating region is an operating region where the amount of fuel which is fed to the gas turbine is smaller than at the time of normal operation.

In another aspect of the present invention, the deteriorated combustibility operating region is an operating region right before the gas turbine stops.

In another aspect of the present invention, when changing the ratio of fuel with a higher combustibility than ammonia in the fuel which is fed to the gas turbine, the fuel with a higher combustibility than ammonia which is fed to the gas turbine is gradually decreased or increased.

In another aspect of the present invention, in the deteriorated combustibility operating region, the gas turbine is not fed ammonia.

In another aspect of the present invention, in the deteriorated combustibility operating region, the gas turbine is fed only fuel with a higher combustibility than ammonia.

In another aspect of the present invention, even at the time of normal operation, the gas turbine is fed fuel with a higher combustibility than ammonia.

In another aspect of the present invention, at the time of normal operation, an amount of fuel with a higher combustibility than ammonia corresponding to 3 to 10% of the total amount of heat generation of the fuel is fed to the gas turbine.

In another aspect of the present invention, the gas turbine is provided with a combustor to which fuel and air are fed and in which the air-fuel mixture of these is made to burn, the combustor is provided with a pilot injection port which injects fuel for diffused combustion into a combustion region of the air-fuel mixture and a plurality of main injection ports which inject fuel for premixed combustion into the combustion region, and ammonia is injected from the main injection ports when the gas turbine is fed both ammonia and fuel with a higher combustibility than ammonia.

In another aspect of the present invention, the pilot injection port constantly feeds fuel with a higher combustibility than ammonia.

In another aspect of the present invention, the gas turbine is provided with a combustor to which fuel and air are fed and in which an air-fuel mixture of these is made to burn, the combustor is provided with a pilot injection port which injects fuel for diffused combustion into a combustion region of the air-fuel mixture and a plurality of main injection ports which inject fuel for premixed combustion into the combustion region, and the fuel which is injected from the plurality of main injection ports is switched in stages for each main injection port when changing a ratio of fuel with a higher combustibility than ammonia in the fuel which is fed to the gas turbine.

In another aspect of the present invention, there is provided a thermal power plant which is provided with a gas turbine which is controlled by the operational control system of a gas turbine of the present invention.

According to the present invention, even if using the nonflammable ammonia as the main fuel, an operational control system of a gas turbine is provided which can stably start, operate, and stop a gas turbine.

These and other objects and features of the present invention will become clearer from the following description of the preferred embodiments given with reference to the attached drawings.

### Brief Description of Drawings

FIG. 1 is a schematic side view of a gas turbine which is controlled in operation by an operational control system of the present invention;
FIG. 2 is a schematic enlarged view of a combustor of a gas turbine;
FIG. 3 is a time chart of the temperature of the combustor, the amount of feed of ammonia, and the amount of feed of natural gas at the time of cold start of a gas turbine and right after start;
FIG. 4 is a time chart of the temperature of the combustor, the amount of feed of ammonia, and the amount of feed of natural gas right before stopping the gas turbine;
FIG. 5 is a time chart of the ratio of ammonia and natural gas in the pilot fuel and main fuel at the time of cold start of a gas turbine and right after startup; and
FIG. 6 is a time chart of the ratio of ammonia and natural gas in the pilot fuel and main fuel right before stopping the gas turbine.

### Description of Embodiments

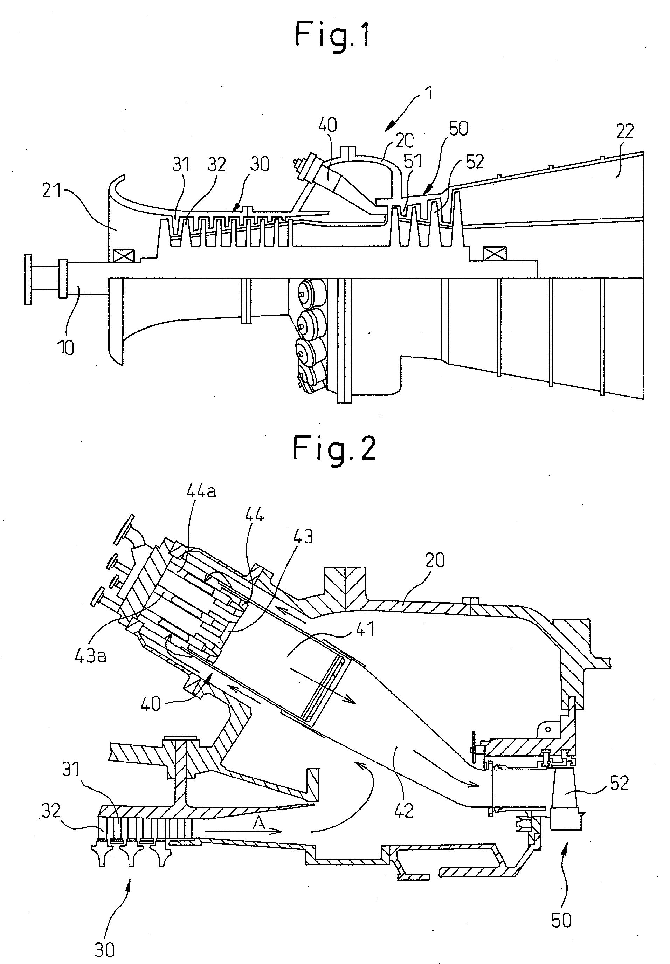

Below, the embodiment of the present invention will be explained in detail by referring to the drawings. FIG. 1 is a schematic side view of a gas turbine 1 whose operation is controlled by the operational control system of the present invention. The gas turbine 1 of the present embodiment is used for a thermal power plant. The output of the gas turbine 1 is used for driving a generator (not shown).

In the gas turbine 1 of the present embodiment, ammonia is mainly used as the fuel, but the structure of the gas turbine 1 is basically the same as the structure of a gas turbine using natural gas or oil as fuel (hereinafter referred to as a "natural gas-use gas turbine").

As shown in FIG. 1, the gas turbine 1 is provided with an output shaft 10, a casing 20, a compressor 30, combustors 40, and a turbine 50. The output shaft 10 is housed in the casing 20 and is supported to be able to rotate with respect to the casing 20. The casing 20 has a suction port 21 for sucking air into the casing 20 and an exhaust port 22 for exhausting combustion gas from the inside of the casing 20.

The compressor 30 is provided inside the casing 20 and is provided with an alternately arranged plurality of stationary blades 31 and movable blades 32. The compressor stationary blades 31 are coupled with the casing 20, while the compressor movable blades 32 are coupled with the output shaft 10. The compressor movable blades 32 rotate with respect to the compressor stationary blades 31 whereby air is sucked in from the suction port 21 of the casing 20 and compressed. The combustor 40 is provided inside the casing 20. The detailed configuration of the combustor 40 will be explained later.

As shown in FIG. 1, the turbine 50 is also arranged in the casing 20 and is provided with an alternately arranged plurality of stationary blades 51 and movable blades 52. The turbine stationary blades 51 are coupled with the casing 20, while the turbine movable blades 52 are coupled with the output shaft 10. The combustion gas produced by the combustion of the air-fuel mixture in the combustors 40 flows through the turbine 50 whereupon the turbine movable blades 52 are driven to rotate with respect to the turbine stationary blades 51. As a result, drive power is generated at the output shaft 10.

In such a configured gas turbine 1, first, the air which is sucked in from the suction port 21 of the casing 20 is adiabatically compressed by the compressor 30. The air which is raised in temperature and pressure by the compressor 30 (compressed air) flows into the combustors 40 and forms an air-fuel mixture together with the fuel which is injected at the combustors 40. This air-fuel mixture is burned in the combustors 40 and becomes a high temperature, high pressure combustion gas which flows into the turbine 50, causes the turbine movable blades 52 to rotate, and generates drive force. In a thermal power plant, this rotational drive force is used to rotate a generator to generate electric power.

FIG. 2 is a schematic enlarged view of a combustor 40. The arrows in the figure show the flows of air and combustion gas. As shown in FIG. 2, a combustor 40 is provided with a combustor tube 41 and a combustor tail pipe 42 communicated with the combustor tube 41. On the center axis of the combustor tube 41, a pilot nozzle 43 is arranged. Around this pilot nozzle 43, a plurality of main premix nozzles 44 are arranged in the circumferential direction at equiangular intervals. The pilot nozzle 43 is provided with a pilot fuel pipe 43a which feeds pilot fuel (fuel for causing diffused combustion) to the pilot nozzle 43, while the main premix nozzles 44 are provided with main fuel pipes 44a which feed main fuel (fuel for causing premixed combustion) to the main premix nozzles 44.

Next, the flows of air and fuel in the thus configured combustor 40 and the modes of combustion of the fuel will be explained. The air which is compressed by the compressor 30, as shown by the arrow A in FIG. 2, flows out from the compressor 30. The compressed air flowing out from the compressor 30 flows through the inside of the casing 20 and from the open end of the combustor tube 41 to the inside of the combustor tube 41, then flows into the pilot nozzle 43 and main premix nozzles 44.

In the pilot nozzle 43 and main premix nozzles 44, fuel is injected into the inflowing compressed air. At these nozzles 43 and 44, an air-fuel mixture is therefore formed. The air-fuel mixture which is injected from the injection port of the pilot nozzle 43 forms a pilot diffused flame. The air-fuel mixture which is injected from the injection ports of the main premix nozzles 44 come into contact with the pilot diffused flame and burns forming a main flame. The combustion gas which is obtained by combustion of such an air-fuel mixture is fed through the combustor tail pipe 42 to the turbine 50 whereby the turbine 50 is made to rotate.

In this way, the structure of the gas turbine 1 is basically the same as the structure of a natural gas-use gas turbine, but as explained above, in the present embodiment, ammonia is mainly used as fuel, so the structure is not completely the same as that of a natural gas-use gas turbine. In particular, the structure of the combustor 40 of the gas turbine 1 differs from the structure of combustor which is used in a natural gas-use gas turbine.

Specifically, the size of the nozzles for injecting the fuel is made larger than that for natural gas-use gas turbines. That is, when changing the fuel from natural gas to ammonia, the energy density per volume of fuel becomes about half. For this reason, to obtain the same combustion energy even if changing the fuel, the amount of fuel to be fed becomes about double. Further, the stoichiometric air-fuel ratio of the ammonia (rate of weight of air which is included in the air-fuel mixture divided by the weight of the fuel where when mixing fuel with the air, theoretically the fuel should completely burn) is smaller than the stoichiometric air-fuel ratio of natural gas. For this reason, the amount of fuel is increased so as to maintain the air-fuel ratio of the air-fuel mixture at the stoichiometric air-fuel ratio even if changing the fuel. Therefore, to enable the feed of a large amount of fuel, it is necessary to increase the size of the nozzles which inject the fuel, in particular, the premix nozzles, or increase the number of the nozzles.

Further, the combustion speed of ammonia is slower than natural gas, so the fuel load (amount of heat generated by combustion per unit volume and unit time) becomes smaller. Therefore, to obtain the same overall amount of heat generated as the case when using natural gas as fuel, it is necessary to increase the size of the combustor 40, in particular the combustor tube 41.

In this way, in the present embodiment, ammonia is made to optimally burn, so the configuration of the combustor 40 of the gas turbine 1 is made different from the configuration of a natural gas-use gas turbine.

In this regard, as explained above, ammonia is a nonflammable substance and will not easily burn. By employing the configuration of the combustor 40 explained above, at the time of normal operation of the gas turbine (that is, not at the time of start of the gas turbine etc., right after start, right before stopping, etc., but when stably and steadily operating the gas turbine), by suitably controlling the fuel feed amount and air feed amount, it is possible to stably burn the ammonia, but at the time of cold start of the gas turbine 1 and right after cold start or right before stopping, it is not possible to stably make the ammonia burn.

Here, if considering the point that with improvements to the shapes of the combustor tube 41 and nozzles 43 and 44 or strengthening of the ignition device as explained above, it is difficult to make the ammonia stably burn at the time of cold start of the gas turbine 1 and right after cold start, some sort of stable source of heat generation is necessary in addition to ammonia and the core flame has to be maintained. Further, the gas turbines of thermal power plants are designed assuming the use of natural gas, heavy oil, pulverized coal, and other fossil fuels as in the past.

Therefore, in the present embodiment, at the time of cold start of the gas turbine 1 and right after cold start, that is, an operating region where the combustibility of ammonia deteriorates compared with at the time of normal operation of the gas turbine 1, the combustor 40 is fed with natural gas, then, after the gas turbine 1 has sufficiently warmed up, fuel is switched from natural gas to ammonia.

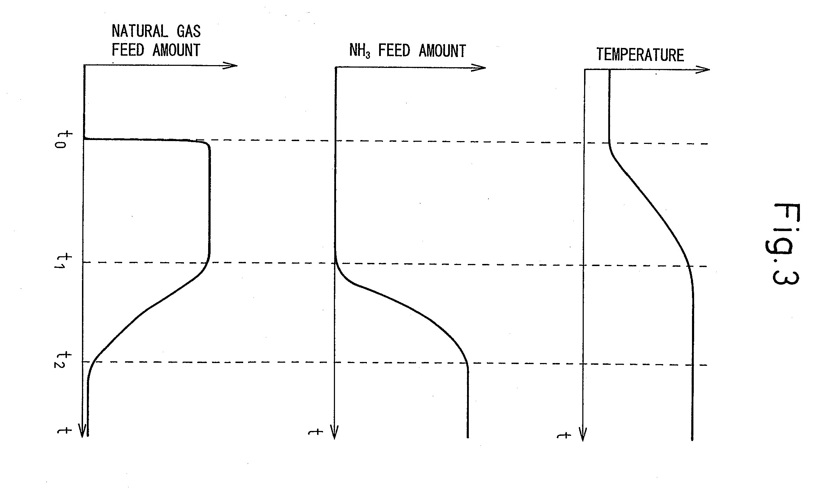

FIG. 3 is a time chart of the ambient temperature around the combustor tube (that is, fuel burning part) 41 (that is, the temperature of the combustor 40 itself, the temperature of the compressed air, the temperature of the combustion gas, etc.) and the amount of feed of ammonia and the amount of feed of natural gas to the gas turbine 1 at the time of cold start of the gas turbine 1 and right after cold start. As shown in FIG. 3, until the time to where the gas turbine 1 is started, the ambient temperature inside the combustor tube 41 is lowered. In such a state, when, at the time t₀, the gas turbine 1 is started, first the gas turbine 1 is fed with only natural gas. Natural gas is a fuel with a higher combustibility compared with ammonia, so it is possible to make it burn substantially completely even if the ambient temperature around the combustor tube 41 is low. Therefore, by feeding only natural gas at the time of cold start of the gas turbine 1 and right after cold start, it is possible to operate the gas turbine 1 well.

After that, due to the combustion of the natural gas, the gas turbine 1 is driven. Along with this, the ambient temperature around the combustor tube 41 rises. When reaching a temperature substantially equal to the ambient temperature around the combustor tube 41 at the time of normal operation of the gas turbine 1, or when reaching an operating state where combustibility of ammonia becomes substantially equal to that at the time of normal operation of the gas turbine 1, the amount of feed of natural gas to the gas turbine 1 starts to be decreased and the amount of feed of ammonia to the gas turbine 1 starts to be increased (time t₁ in FIG. 3). At this time, the ambient temperature around the combustor tube 41 becomes sufficiently high, so even if the gas turbine 1 is fed ammonia, the ammonia is made to burn well without incomplete combustion.

After that, the amount of feed of natural gas to the gas turbine 1 is made to gradually decrease, the amount of feed of ammonia to the gas turbine 1 is made to gradually increase, and, finally, only ammonia is fed to the gas turbine 1 (time t₂ in figure). At this time as well, the ambient temperature around the combustor tube 41 is already a sufficiently high temperature, so the ammonia is made to burn well without incomplete combustion.

Note that, natural gas and ammonia differ in physical properties, so if rapidly switching the fuel which is fed to the gas turbine 1, incomplete combustion of the air-fuel mixture ends up occurring. However, in the present embodiment, the amounts of feed of natural gas and ammonia are gradually changed, so incomplete combustion is kept from occurring during the switching of the fuel.

In the same way, even right before stopping the gas turbine 1, that is, an operating region where the combustibility of ammonia deteriorates compared with the time of normal operation of the gas turbine 1, the fuel which is fed to the gas turbine 1 is switched from ammonia to natural gas.

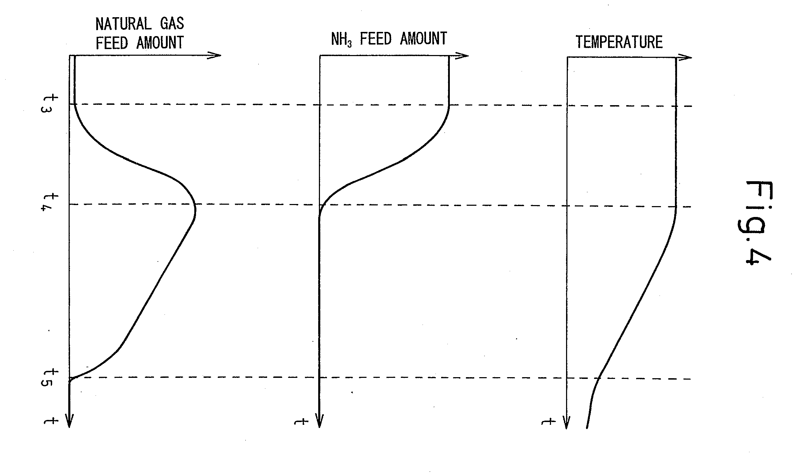

FIG. 4 is a time chart of the ambient temperature around the combustor tube 41 and the amount of feed of ammonia and the amount of feed of natural gas to the gas turbine 1 right before stopping the gas turbine. As shown in FIG. 4, until the time t₃ where deceleration of the gas turbine 1 is started, the gas turbine 1 normally operates and the ambient temperature around the combustor tube 41 is held high. When making the gas turbine 1 stop, before starting deceleration of the gas turbine 1, first the amount of feed of ammonia to the gas turbine 1 starts to be decreased and the amount of feed of natural gas to the gas turbine 1 starts to be increased (time t₃ in FIG. 4). At this time, the ambient temperature around the combustor tube 41 is held at a high temperature, so the ammonia which is fed to the gas turbine 1 is made to burn well without incomplete combustion.

After that, the amount of feed of ammonia to the gas turbine 1 is made to gradually decrease, the amount of feed of natural gas to the gas turbine 1 is made to gradually increase, and, finally, only natural gas is fed to the gas turbine 1 (time t₄ in FIG. 4).

After only natural gas is fed to the gas turbine 1 in this way, does the gas turbine 1 start decelerating. The gas turbine 1 is decelerated by reducing the amount of natural gas which is fed to the gas turbine 1, so the ambient temperature around the combustor tube 41 is made to gradually fall along with deceleration of the gas turbine 1. Finally, when the feed of natural gas to the gas turbine 1 ends, the gas turbine 1 is made to stop (time t₅ in FIG. 4). In this way, even if the ambient temperature around the combustor tube 41 falls, the gas turbine 1 is fed with only natural gas as fuel, so the fuel which is fed can be substantially completely burned and therefore the gas turbine 1 can be operated well.

In this way, in the present embodiment, at the time of cold start and right after cold start or right before stopping or in another deteriorated combustibility operating region where the combustibility of ammonia deteriorates compared with the time of normal operation of the gas turbine 1, the gas turbine 1 is not fed ammonia, but is fed only natural gas. Due to this, it is possible to prevent incomplete combustion of ammonia at the gas turbine 1 whereby discharge of a large amount of ammonia around the gas turbine 1 is prevented. That is, according to the present embodiment, while using ammonia as the main fuel, it is possible to operate the gas turbine well in all operating regions. Due to this, direct burning of ammonia, which was never considered as a fuel for gas turbines for generating power in the past, becomes possible, so it is possible to greatly contribute to the reduction of CO₂ and reduce depletion of fossil fuels.

Note that, in the above embodiment, in the deteriorated combustibility operating region, only natural gas was fed. However, if at least reducing the amount of feed of ammonia and increasing the amount of feed of natural gas, it is possible to suppress incomplete combustion of ammonia in the gas turbine 1 even without completely stopping the feed of ammonia. Therefore, in the deteriorated combustibility operating region, the feed of ammonia need not be completely stopped. Summarizing these, in the present embodiment, in the deteriorated combustibility operating region, the ratio of natural gas in the fuel which is fed to the gas turbine 1 is increased compared with at the time of normal operation.

Further, in the above embodiment, as examples of the deteriorated combustibility operating region where the combustibility of ammonia deteriorates compared with the time of normal operation of the gas turbine 1, the operating regions at the time of cold start and right after cold start or right before stopping are mentioned, but the deteriorated combustibility operating region is not limited to these. For example, the case where even if feeding ammonia as fuel, the ammonia only incompletely vaporizes may be mentioned. If the vaporization of ammonia is incomplete, incomplete combustion of ammonia easily occurs and therefore the combustibility of ammonia deteriorates. By using natural gas as fuel at such a time, it is possible to suppress incomplete combustion of fuel and operate the gas turbine 1 better. Such an operating region also includes the time of cold start and right after cold start.

Further, as the deteriorated combustibility operating region, an operating region where the ambient temperature around the combustor tube 41 (ambient temperature around fuel burning part) is lower than at the time of normal operation of the gas turbine 1 may be mentioned. If the ambient temperature around the combustor tube 41 is low, as explained above, the ammonia has difficulty vaporizing and therefore the ammonia deteriorates in combustibility. By using natural gas as fuel at such a time, it is possible to suppress incomplete combustion of fuel and operate the gas turbine 1 better. Such an operating region also includes the time of cold start and right after cold start.

Furthermore, as the deteriorated combustibility operating region, an operating region in which the amount of fuel which is fed to the gas turbine 1 is smaller than at the time of normal operation of the gas turbine 1 may be mentioned. If the amount of fuel which is fed to the gas turbine 1 is small, due to heat loss and the heat of vaporization of ammonia, the temperature of the combustion gas becomes lower and the ambient temperature around the combustor tube 41 falls. Due to this, the combustibility of ammonia deteriorates. At such a time, by using natural gas as a fuel, it is possible to suppress incomplete combustion of fuel and operate the gas turbine 1 better. Such an operating region includes the time right before stopping operation as well.

Further, in the present embodiment, even at the time of normal operation of the gas turbine 1, it is also possible to prepare for unforeseen situations during operation by continuing to feed natural gas in a very small amount, for example, exactly an amount corresponding to about 3 to 10% of the total amount of heat generated by the fuel as a whole. Due to this, it becomes possible to use the combustion of natural gas as the pilot burner and possible to stably hold the flame as a core, so it is possible to prevent unforeseen stoppages of the turbine. Further, when making the nozzles which inject the natural gas and the ammonia separate nozzles, it is possible to use this small amount of fuel to cool the natural gas-use nozzles which are exposed in the high temperature combustor, so it is possible to improve the durability of the nozzles.

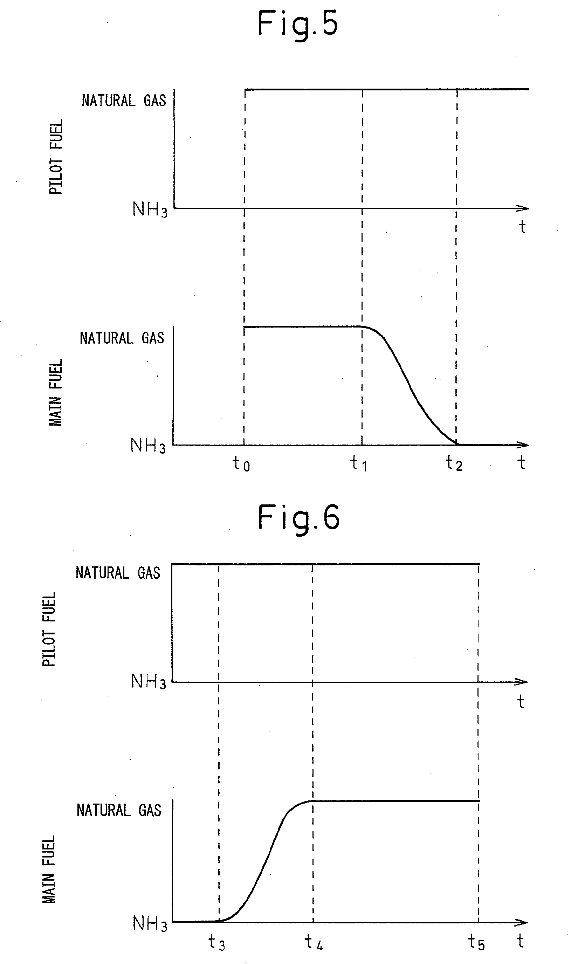

Next, referring to FIG. 5 and FIG. 6, the ratio of the ammonia in the fuel which is injected from the two nozzles 43 and 44 of the combustor 40 will be explained. Below, the case of continuing to feed a small amount of natural gas at the time of normal operation of the gas turbine is shown. FIG. 5 and FIG. 6 are time charts of the ratios of ammonia and natural gas in the pilot fuel and the main fuel at the time of cold start and right after cold start, and right before stopping.

At the time of cold start of the gas turbine 1 and right after cold start, from the time to to time t₁, that is, from the commencement of start of the gas turbine 1 until the ambient temperature around the combustor tube 41 becomes sufficiently high, the pilot nozzle 43 and the main premix nozzles 44 both inject natural gas. At this time, when injecting a small amount of ammonia, ammonia is injected from the main premix nozzles 44.

From the time t₁ to the time t₂, that is, from when the ambient temperature around the combustor tube 41 becomes sufficiently high to when the gas turbine 1 is fed only ammonia, the ratio of the ammonia in the fuel which is injected from the main premix nozzles 44 gradually becomes higher. At this time, it is possible to feed all main premix nozzles 44 fuel of a mixture of natural gas and ammonia and to gradually raise the ratio of ammonia in this fuel. On the other hand, by successively switching the fuel which is injected from the plurality of main premix nozzles 44 in stages for each main premix nozzle 44 from natural gas to ammonia, it is also possible to gradually raise the ratio of ammonia in the total fuel which is injected from all main premix nozzles 44. Alternatively, it is also possible to switch the fuel which is fed to each combustor 40 successively from natural gas to ammonia. Finally, at the time t₂, the fuel which is injected from all main premix nozzles 44 is made ammonia. On the other hand, the pilot nozzle 43 injects natural gas from the time t₁ to the time t₂.

At the time t₂ on, the fuel which is injected from all main premix nozzles 44 is made ammonia and the fuel which is injected from the pilot nozzle 43 is made only natural gas as it is or is made fuel of a mixture of natural gas and ammonia.

Right before stopping the gas turbine, as shown in FIG. 6, the fuel which is fed from the two nozzles 43 and 44 is switched from ammonia to natural gas by the reverse procedure from right after start, then the total amount of fuel which is fed to the gas turbine 1 is reduced.

Note that, in the above embodiment, natural gas is used as the fuel with a higher combustibility than ammonia, but oil or another fossil fuel may also be used. So long as a fuel with a higher combustibility than ammonia, a fuel other than a fossil fuel may also be used.

Further, in the above embodiment, the case was shown of using the operational control system of the present invention for control of the gas turbine of a thermal power plant, but it may also be used for control of a gas turbine for other applications, for example, a gas turbine for driving a pump, a gas turbine for driving a vehicle, aircraft, or ship, etc.

Furthermore, in the above embodiment, the turbine facility provided with a turbine which is driven using mainly ammonia as fuel was made a gas turbine, but the turbine facility may also be made a steam turbine provided with a boiler. In this case, instead of the combustor 40 of the gas turbine 1, fuel is burned in the boiler.

While the invention has been described with reference to specific embodiments chosen for purpose of illustration, it should be apparent that numerous modifications could be made thereto by those skilled in the art without departing from the basic concept and scope of the invention.

### Reference Signs List

- 1: gas turbine
- 10: output shaft
- 20: casing
- 30: compressor
- 40: combustor
- 41: combustor tube
- 42: combustor tail pipe
- 43: pilot nozzle
- 44: main premix nozzle
- 50: turbine

## Claims

1. An operational control system of a gas turbine which is driven using mainly ammonia as fuel, wherein in a deteriorated combustibility operating region where the combustibility of ammonia deteriorates compared with the time of normal operation of the gas turbine, a ratio of fuel with a higher combustibility than ammonia in the fuel which is fed to the gas turbine is increased over the time of normal operation.

2. An operational control system of a gas turbine as set forth in claim 1, wherein the fuel with a higher combustibility than ammonia is a fossil fuel.

3. An operational control system of a gas turbine as set forth in claim 1 or 2, wherein said deteriorated combustibility operating region is an operating region where vaporization of ammonia is incomplete when feeding ammonia to the gas turbine as main fuel.

4. An operational control system of a gas turbine as set forth in any one of claims 1 to 3, wherein said deteriorated combustibility operating region is an operating region where an ambient temperature around a fuel burning part where the fuel is burned is lower compared with the time of normal operation.

5. An operational control system of a gas turbine as set forth in any one of claims 1 to 4, wherein said deteriorated combustibility operating region is an operating region at the time of start of the gas turbine or right after start.

6. An operational control system of a gas turbine as set forth in claim 1 or 2, wherein said deteriorated combustibility operating region is an operating region where the amount of fuel which is fed to the gas turbine is smaller than at the time of normal operation.

7. An operational control system of a gas turbine as set forth in any one of claims 1, 2, and 6, wherein said deteriorated combustibility operating region is an operating region right before the gas turbine stops.

8. An operational control system of a gas turbine as set forth in any one of claims 1 to 7, wherein when changing the ratio of fuel with a higher combustibility than ammonia in the fuel which is fed to said gas turbine, the fuel with a higher combustibility than ammonia which is fed to the gas turbine is gradually decreased or increased.

9. An operational control system of a gas turbine as set forth in any one of claims 1 to 8, wherein, in said deteriorated combustibility operating region, the gas turbine is not fed ammonia.

10. An operational control system of a gas turbine as set forth in claim 9, wherein in said deteriorated combustibility operating region, the gas turbine is fed only fuel with a higher combustibility than ammonia.

11. An operational control system of a gas turbine as set forth in any one of claims 1 to 10, wherein even at the time of normal operation, the gas turbine is fed fuel with a higher combustibility than ammonia.

12. An operational control system of a gas turbine as set forth in claim 11, wherein, at the time of normal operation, an amount of fuel with a higher combustibility than ammonia corresponding to 3 to 10% of the total amount of heat generation of the fuel is fed to the gas turbine.

13. An operational control system of a gas turbine as set forth in any one of claims 1 to 12, wherein said gas turbine is provided with a combustor to which fuel and air are fed and in which the air-fuel mixture of these is made to burn, the combustor is provided with a pilot injection port which injects fuel for diffused combustion into a combustion region of the air-fuel mixture and a plurality of main injection ports which inject fuel for premixed combustion into the combustion region, and ammonia is injected from the main injection ports when the gas turbine is fed both ammonia and fuel with a higher combustibility than ammonia.

14. An operational control system of a gas turbine as set forth in claim 13, wherein said pilot injection port constantly feeds fuel with a higher combustibility than ammonia.

15. An operational control system of a gas turbine as set forth in any one of claims 1 to 14, wherein said gas turbine is provided with a combustor to which fuel and air are fed and in which an air-fuel mixture of these is made to burn, the combustor is provided with a pilot injection port which injects fuel for diffused combustion into a combustion region of the air-fuel mixture and a plurality of main injection ports which inject fuel for premixed combustion into the combustion region, and the fuel which is injected from the plurality of main injection ports is switched in stages for each main injection port when changing a ratio of fuel with a higher combustibility than ammonia in the fuel which is fed to said gas turbine.

16. A thermal power plant which is provided with a gas turbine which is controlled by an operational control system of a gas turbine of any one of claims 1 to 15.
